# EUROPÄISCHE PATENTSCHRIFT

(11) **EP 1 019 671 B1**
(45) Veröffentlichungstag und Bekanntmachung des Hinweises auf die Patenterteilung: **28.11.2001**
(21) Anmeldenummer: 98952687.6
(22) Anmeldetag: 01.10.1998
(51) Int. Cl.: G01C 15/00, G01S 5/14

(54) **VERFAHREN ZUM SAMMELN UND VERKNÜPFEN VON POSITIONSDATEN AUS SATELLITENORTUNG UND WEITEREN DATEN**
METHOD FOR COLLECTING AND LINKING POSITION DATA FROM SATELLITE POSITIONING WITH ADDITIONAL DATA
PROCEDE POUR COLLECTER ET COMBINER DES DONNEES DE POSITION PROVENANT DE REPERAGE PAR SATELLITE, AVEC D'AUTRES DONNEES

(30) Priorität: 02.10.1997 DE 19743705
(43) Veröffentlichungstag der Anmeldung: 19.07.2000
(73) Patentinhaber: Tele-Info Digital Publishing AG, 30827 Garbsen (DE)
(72) Erfinder: SOOD, Ralf, A., D-30826 Garbsen (DE)
(74) Vertreter: Quermann, Andreas
(86) Internationale Anmeldenummer: EP9806267
(87) Internationale Veröffentlichungsnummer: WO9918410

(56) Entgegenhaltungen:
- DE-A- 3 744 532
- DE-C- 19 525 291
- US-A- 5 214 757
- US-A- 5 633 946
- FRANK YEE: "GPS & VIDEO DATA COLLECTION IN LOS ANGELES COUNTY - A STATUS REPORT" POSITION LOCATION AND NAVIGATION SYMPOSIUM (PLANS), LAS VEGAS, APR. 11 - 15, 1994, 11. April 1994, Seiten 388-393, XP000489369 INSTITUTE OF ELECTRICAL AND ELECTRONICS ENGINEERS
- SCHWARZ K P ET AL: "VIASAT - A MOBILE HIGHWAY SURVEY SYSTEM OF HIGH ACCURACY" PROCEEDINGS OF THE VEHICLE NAVIGATION AND INFORMATIONS SYSTEMS CONFERENCE, OTTAWA, OCT. 12 - 15, 1993,12. Oktober 1993, Seiten 476-481, XP000448523 REEKIE H M
- BOSSLER J D: "USING THE GPSVAN:TM OPERATIONAL EFFICIENCIES THROUGH GIS AND GPS" ANNUAL REVIEW OF COMMUNICATIONS, Bd. 48, 1. Januar 1994, Seiten 833-836, XP000543231
- HUNTER T ET AL: "VEHICLE NAVIGATION USING DIFFERENTIAL GPS" 1990'S - DECADE OF EXCELLENCE IN THE NAVIGATION SCIENCES, LAS VEGAS, MAR. 20 - 23, 1990,20. März 1990, Seiten 392-398, XP000163814 INSTITUTE OF ELECTRICAL AND ELECTRONICS ENGINEERS

## Beschreibung

### Technisches Gebiet

Die Erfindung betrifft ein Verfahren zum Sammeln und Verknüpfen von Positionsdaten, die durch Satellitenortung gewonnen werden, und weiteren Daten. Weiterhin betrifft die Erfindung auf dem Verfahren basierende Fahrzeug-Zielführungssysteme, Flottenmanagementsysteme, automatische Fahrzeug-Notrufsysteme oder Fahrzeug-Diebstahlsicherungssysteme sowie Systeme zur Simulation und/oder Visualisierung von beliebigen Teilen von realen Umgebungen und außerdem die Herstellung von Datenbanken, die solchen Systemen zugrunde liegen.

### Stand der Technik

Die Satellitennavigationssysteme GPS (Global Positioning System) und GLONASS (Global Orbiting NAvigation Satellite System), die zusammen die Grundlage für ein globales Satellitennavigationssystem GNSS (Global Navigation Satellite System) bilden, ermöglichen eine Vielzahl von praktischen Anwendungen, deren bedeutsamste verschiedene Navigationssysteme für Seefahrt, Luftfahrt und Landverkehr sind. Eine Einführung in Technik und Anwendungen der Satellitennavigation wird in den Zeitschriften "Spektrum der Wissenschaft", Januar 1996, Seiten 102 bis 119, oder "Scientific American", Februar 1996, Seiten 32 bis 38, gegeben.

Für die Fahrzeugnavigation benötigt man außer der aktuellen Fahrzeugposition, die durch ein Satellitenortungsgerät gewonnen wird, digitalisierte Landkarten, die mit Zusatzinformationen wie Informationen zur aktuellen Verkehrslage, Brancheninformationen oder einem Hotelführer verburiden werden können. Anhand der aktuellen Fahrzeugposition und einer gewünschten Zielposition kann zum Beispiel in einem Datenverarbeitungsgerät eine geeignete Fahrtroute errechnet werden, die dem Fahrzeugführer optisch oder akustisch angezeigt wird. Die elektronische Landkarte kann sich entweder auf einem Speichermedium im Fahrzeug selbst befinden, oder sie befindet sich in einer Zentrale, mit der das Fahrzeug in Funkkontakt steht und in der auch die Routenberechnung vorgenommen wird.

Die elektronischen Landkarten für Fahrzeugnavigationssysteme werden aus nationalen Grundkarten, ergänzenden herkömmlichen Landkarten und differentiellen GPS/GLONASS-Messungen gewonnen. Die damit erreichbare Ortsauflösung korrespondiert gut mit der Ortsauflösung von heutigen GPS-Empfängern für den Massenmarkt. Nachteilig ist die Kurzlebigkeit einer solchen elektronischen Landkarte, sei es weil GPS-Empfänger mit höherer Ortsauflösung auf den Markt kommen, die noch besseres Kartenmaterial wünschenswert machen, oder weil genauere Basisdaten z.B. in Form von Luftaufnahmen zur Verfügung stehen.

Ein erheblicher Nachteil des auf herkömmliche Weise gewonnenen elektronischen Kartenmaterials ist außerdem, daß das einzige landgebundene Anwendungsgebiet von großer wirtschaftlicher Bedeutung die Anwendung für Fahrzeuge ist. Auf diesem Gebiet wurden zwar bereits einige nützliche Anwendungen vorgeschlagen, außer dem oben beschriebenen Zielführungssystem beispielsweise Systeme für Flottenmänagement, automatischen Notruf und Diebstahlsicherung, jedoch sind die Anforderungen dieser Systeme an das Kartenmaterial sehr unterschiedlich, so daß eine elektronische Landkarte normalerweise nur für eines dieser Systeme optimal ausgelegt sein kann. Berücksichtigt man außerdem die erwähnte Gefahr, daß das Kartenmaterial schnell veraltet, wird manch ein für die Allgemeinheit nützliches Vorhaben, das technisch durchaus realisierbar wäre, häufig an einem ungünstigen Kosten/Nutzen-Verhältnis scheitern.

Aus der DE-C-195 26 291 ist ein Verfahren zum Sammeln und Verknüpfen von Positionsdaten, die durch Satellitenortung gewonnen werden, und weiteren Daten bekannt, bei dem mit wenigstens einem Fahrzeug im wesentlichen alle Straßen eines oder mehrerer zusammenhängender Gebiete abgefahren und mit dem Satellitenortungsgerät laufend automatisch Daten zur aktuellen Position jedes Fahrzeugs gewonnen werden. Außerdem kommt eine Kamera zur Aufnahme von Verkehrszeichen zum Einsatz.

Aus der DE-A-37 44 532 ist es bekannt, Start- und Zielpunkt durch Eingabe von Straßenkennungen und Hausnummern in ein Navigationssystem einzugeben. Aus der DE-A-195 05 487 und den JP-A-09 033 270, JP-A-09 033 271 (Abstracts) ist es bekannt, aufgenommene und dargestellte Bildinformationen als zusätzliche Navigationshilfe zu verwenden.

Ein Verfahren gemäß dem Oberbegriff von Patentanspruch 1 ist aus der US 5 633 946 bekannt. Das Verfahren, das der Anmelder dieses US-Patentes anwendet, ist allgemein beschrieben in dem Dokument "Frank Yee: "GPS & Video Data Collection in Los Angeles County - A Status Report", Position Location and Navigation Symposium (Plans), Las Vegas, Apr. 11 - 15, 1994, Seiten 388-393, Institute of Electrical and Electronics Engineers". In diesem Dokument wird außerdem vorgeschlagen, individuelle Hausadressen zu sammeln.

### Darstellung der Erfindung

Der Erfindung liegt die Aufgabe zugrunde, ein Verfahren zum Sammeln und Verknüpfen von Positionsdaten aus Satellitenortung und weiteren Daten zu schaffen, das sehr genaue, auch auf lange Sicht nutzbringende Fahrzeugnavigationssysteme und außerdem Verwendungen in Verbindung mit Fahrzeugen sowie weitere, nicht auf Fahrzeuge beschränkte Verwendungen ermöglicht.

Das Verfahren gemäß der Erfindung ist durch die in Patentanspruch 1 angegebenen Merkmale gekennzeichnet.

Ein erfindungsgemäßes Verfahren zur Herstellung einer Datenbank für ein Fahrzeug-Zielführungssystem, ein Flottenmanagementsystem, ein automatisches Fahrzeug-Notrufsystem oder ein Fahrzeug-Diebstahlsicherungssystem oder für ein System zur Simulation und/oder Visualisierung von beliebigen Teilen von realen Umgebungen umfaßt, (a) mit wenigstens einem Fahrzeug im wesentlichen alle Straßen eines oder mehrerer zusammenhängender Gebiete abzufahren, wobei mit einem Satellitenortungsgerät laufend automatisch Daten zur aktuellen Position jedes Fahrzeugs gewonnen werden und wobei mit einer oder mehreren Kameras Bilder der einzelnen anliegenden Gebäude aus im wesentlichen horizontaler Sicht aufgenommen werden, (b) die postalischen Adressen der aufgenommenen Gebäude zu ermitteln, wobei zumindest die Hausnummern anhand der Hausnummernschilder an den Gebäuden ermittelt werden, und (c) zu jedem einzelnen Gebäude die Positionsdaten, Daten zur postalischen Adresse und wenigstens ein digitalisiertes Bild des Gebäudes miteinander verknüpft in einer Datenbank zu speichern.

Ein erfindungsgemäßes Fahrzeug-Zielführungssystem, Flottenmanagementsystem, automatisches Fahrzeug-Notrufsystem oder Fahrzeug-Diebstahlsicherungssystem oder ein System zur Simulation und/oder Visualisierung von beliebigen Teilen von realen Umgebungen basiert auf Positionsdaten, die durch Satellitenortung gewonnen werden, und weiteren Daten, die dadurch gewonnen werden, daß mit wenigstens einem Fahrzeug im wesentlichen alle Straßen eines oder mehrerer zusammenhängender Gebiete abgefahren werden, wobei mit einem Satellitenortungsgerät laufend automatisch Daten zur aktuellen Position jedes Fahrzeugs gewonnen werden und wobei mit einer oder mehreren Kameras Bilder der einzelnen anliegenden Gebäude aus im wesentlichen horizontaler Sicht aufgenommen werden, und daß die postalischen Adressen der aufgenommenen Gebäude ermittelt werden, wobei zumindest die Hausnummern anhand der Hausnummernschilder an den Gebäuden ermittelt werden, und darauf, daß zu jedem einzelnen Gebäude die Positionsdaten, Daten zur postalischen Adresse und wenigstens ein digitalisiertes Bild des Gebäudes miteinander verknüpft in einer Datenbank gespeichert werden.

In einer bevorzugten Ausführungsform der Erfindung werden während der Fahrt außerdem laufend Umweltmeßdaten aufgenommen, beispielsweise Daten zur Umweltbelastung durch Elektrosmog, Ozon, Radioaktivität etc.. Diese Daten werden unter Verknüpfung mit den übrigen Daten ebenfalls in der Datenbank gespeichert.

Die Positionsdaten werden vorzugsweise unter Verwendung des bekannten Differential-GPS/GLONASS (DGPS/DGLONASS) gewonnen. DGPS/DGLONASS ist eine Differenzkorrektur der GPS/GLONASS-Daten anhand von Referenzdaten, um eine Ortsgenauigkeit in der Größenordnung von einem Meter zu erreichen. Diese Genauigkeit ist für das erfindungsgemäße Verfahren notwendig, aber auch hinreichend. Die Differenzkorrektur kann entweder im fahrenden Fahrzeug durchgeführt werden, wobei dieses bevorzugt über ein vorhandenes flächendeckendes Mobilkommunikationsnetz mit den Referenzdaten versorgt wird, oder durch spätere Nachbearbeitung, wobei im Fahrzeug zu jeder Position die genaue Zeit aufgezeichnet werden muß, zu der sich das Fahrzeug in dieser Position befindet.

Die ermittelte postalische Adresse umfaßt in erster Linie die Hausnummer und den Straßennamen und kann je nach der Größe des erfaßten Gebietes außerdem die entsprechenden Stadteilnamen, Städtenamen usw. umfassen. Die Hausnummer wird stets optisch ermittelt, zum Beispiel durch unmittelbare Betrachtung durch einen Fahrzeuginsassen, der sie sofort manuell oder verbal in ein Datenverarbeitungsgerät eingibt, oder durch Nachbetrachtung der aufgenommenen Bilder. Der Straßenname kann auf die gleiche Weise anhand der Straßennamensschilder ermittelt werden. Für einen Teil von Deutschland gibt es bereits Dateien mit den geographischen Positionen von Straßen, aus denen der Straßenname alternativ automatisch ermittelt werden kann. Eine weitere Möglichkeit zur automatischen Ermittlung von Hausnummer und/oder Straßenname besteht darin, ein automatisches Schrifterkennungssystem (OCR) zu verwenden, entweder vor Ort im Fahrzeug oder bei einer späteren Nachschau der Bilder.

Als Kamera können Fotoapparate oder Filmkameras verwendet werden. Im Prinzip können zwar konventionelle Aufnahmegeräte mit Zelluloidstreifen verwendet werden, deren Bilder später digitalisiert werden, jedoch werden digitale Aufnahmegeräte aus zwei Gründen bevorzugt. Erstens ist es günstiger, die Bilder sofort in digitaler Form vorliegen zu haben, und zweitens können deren Speichermedien für weitere Fahrten wiederverwendet werden.

Eine digitale Still-Kamera wie ein digitaler Fotoapparat liefert zwar die beste Bildqualität, diese wird jedoch nur bei einem Halt des Fahrzeugs vor jedem Gebäude erreicht. Wird eine digitale Still-Kamera verwendet, können die vorzugsweise datenkomprimierten Bilder zusammen mit den Positionsdaten und ggf. den Straßennamen bzw. Hausnummern auf computerlesbaren Speichermedien gespeichert werden. Falls die Differenzkorrektur nicht bereits im Fahrzeug stattgefunden hat, werden außerdem die genauen Aufnahme-zeiten gespeichert. Die Speichermedien werden in eine Zentrale gebracht, in der ggf. die Differenzkorrektur und weitere Auswertungen stattfinden. Falls ein Telekommunikationsnetz mit ausreichender Übertragungskapazität zur Verfügung steht, kommt auch eine Funkübertragung der Bilddaten zur weiteren Auswertung in Betracht.

Wird eine Filmkamera verwendet, beispielsweise eine handelsübliche digitale Filmkamera mit 25 Vollbildern, d.h. 50 Halbbildern pro Sekunde, so können die Straßen in schneller Fahrt ohne Halt durchfahren werden. Die große anfallende Datenmenge kann leicht auf den für Kameras üblichen Magnetbändern gespeichert werden, gegebenenfalls unter Zuhilfenahme üblicher Daten-kompressionstechniken, wobei die Koordinaten oder die Koordinaten mit den Zeiten und ggf. die Straßennamen/Hausnummern z.B. auf dem Tonkanal oder in Bild-Leerzeilen aufgezeichnet werden können. Allerdings muß die Verschlußzeit pro Bild herabgesetzt werden, damit aus dem fahrenden Fahrzeug heraus aufgenommen werden kann. Ferner muß von einer genügenden Höhe aus aufgenommen werden, mindestens 1,5 Meter, damit die Sicht nicht zufällig durch Fahrzeuge am Straßenrand verdeckt wird. Eine ununterbrochen betriebene handelsübliche Filmkamera würde außerdem normalerweise viele unverwendbare Bilder aufnehmen, jedoch können die Leerzeiten ausgenutzt werden, um mit Hilfe von Spiegelsystemen oder dergleichen vergrößerte Bildausschnitte des Bereichs aufzunehmen, in dem sich normalerweise die Hausnummern befinden. Außerdem könnten perspektivische Ansichten der Gebäude und, falls es die Kamera zuläßt, z.B. Infrarotaufnahmen hergestellt werden. Die auf diese Weise mit geringem Aufwand gewonnenen zusätzlichen Bilder, die alternativ auch mit einer oder mehreren Standbild-Kameras aufgenommen werden können, ermöglichen weitere Nutzungsarten.

Durch die beschriebene Aufnahmetechnik während der Fahrt werden keine Sondergenehmigungen für Langsamfahrt und Stops benötigt, wie sie bei der zuerst beschriebenen Variante mit Aufnahme im Stand erforderlich sind. Allerdings ist es schwierig und fehleranfällig, die Hausnummern im Fahren einzugeben, so daß in diesem Fall eher eine Hausnummernermittlung im Rahmen einer Nachbearbeitung in Betracht kommt.

Die beiden beschriebenen Erfassungstechniken, im Stand und im Fahren, lassen sich kombinieren, um von den Vorteilen beider Techniken zu profitieren. Ein Beispiel für ein solches kombiniertes Verfahren ist, die Strecke mit einem Zweirad abzufahren, insbesondere einem Motorrad, das mit einem Satellitenortungsgerät, einem elektronischen Speicher und einem Dateneingabegerät ausgestattet ist. Der Zweiradfahrer kann ohne Behinderung des Verkehrsflusses Halt machen und jede Hausnummer eingeben, vorzugsweise in ein Spracherkennungssystem als Dateneingabegerät, wobei die Hausnummer zusammen mit den dazugehörigen Koordinaten und ggf. Zeiten gespeichert wird. Anschließend wird die Strecke mit einem hoch bauenden Fahrzeug noch einmal abgefahren, das ebenfalls mit einem Satellitenortungsgerät ausgerüstet ist und an das die vom Zweirad gewonnenen Daten durch Übergabe eines Speichermediums oder per Funk übermittelt werden, wobei die Kamera an den ermittelten Hausnummernpositionen automatisch ausgelöst wird.

Wie beschrieben, können sämtliche Verfahrensschritte mit Ausnahme des Abfahrens der Straßen automatisch durchgeführt werden. Aber selbst der Fahrer kann unter Umständen eingespart werden, und zwar indem ein Gerät zur automatischen Durchführung des Verfahrens auf einem Fahrzeug montiert wird, das die Straßen ohnehin abfährt. In Betracht kommen zum Beispiel Fahrzeuge der kommunalen Müllabfuhr, die sämtliche Straßen eines Gebietes abfahren und praktisch vor jedem Haus einen Stop einlegen.

Herkömmliche Fahrzeugnavigationssysteme verknüpfen gemessene Positionen mit kartographischen Positionen, so daß sie letztlich nichts anderes als wiederum geographische Informationen liefern, die dem Benutzer in irgendeiner mehr oder weniger abstrakten Form wie Wegweisern oder Karten angezeigt werden. Im Gegensatz dazu verknüpft die Erfindung gemessene geographische Positionen mit postalischen Adressen und zugehörigen horizontalen Gebäudeansichten, was ein wesentlich breiteres Informationsspektrum liefert.

Dies ermöglicht eine sehr viel bessere Fahrzeugnavigation sowohl für private oder gewerbliche Zwecke als auch für kommunale Aufgaben wie die Führung von Einsatzfahrzeugen von Polizei und Rettungsdiensten. Erstens gibt es mit der Navigationsfähigkeit nach Straße und Hausnummer eine sehr viel höhere Genauigkeit als bisher. Zweitens wird es möglich, ein großes zusammenhängendes Gebiet zu bedienen, beispielsweise das gesamte Straßennetz Deutschlands. Drittens, da die Navigation "hausnummerngenau" durchgeführt werden kann, sind auf lange Sicht keine weiteren Verbesserungen erforderlich oder wünschenswert. Viertens ist es möglich, nach Bildern einer realen Umgebung zu navigieren, die einem Fahrzeugführer angezeigt werden. Dies kommt dem menschlichen Aufnahmevermögen sehr viel mehr entgegen als z.B. abstrakte Karten oder Richtungsanweisungen, ist folglich ergonomischer, und hilft Fehlentscheidungen zu vermeiden.

Über die erwähnte Fahrzeugnavigation hinaus ermöglicht das erfindungsgemäße Verfahren, nachdem es einmal durchgeführt worden ist, noch viele weitere nutzbringende Anwendungen. Beispielsweise kann ein automatisches Notrufsystem, das automatisch einen Notruf erzeugt und via Mobilkommunikation an eine Notrufzentrale absetzt, wenn ein Kollisionssensor einen Unfall des Fahrzeugs registriert, zugleich Straße und Hausnummer des Unfallortes übermitteln, so daß der Unfallort schneller aufgefunden werden kann. Ein solches Notrufsystem ist nicht auf Fahrzeuge beschränkt, sondern kann z.B. ein tragbares Gerät sein, das eine auf irgendeine Weise gefährdete Person ständig bei sich trägt. Die Insassen eines alarmierten Rettungsfahrzeugs wiederum können sich bereits während der Fahrt ein Bild vom Einsatzort und seiner Umgebung machen.

Weitere Anwendungsmöglichkeiten erschließen sich an einem Computer, der mit einer erfindungsgemäß hergestellten Datenbank verbunden ist. So kann durch die Auswahl eines Bildes eines Gebäudes dessen Hausnummer und Position ermittelt werden, oder durch die Eingabe der Hausnummer können das Bild und die Position ermittelt werden. Dies hilft Ortsbesichtigungen ersparen, beispielsweise bei Planungsverfahren, behördlichen Genehmigungsverfahren oder der Zuordnung von Umweltmeßdaten.

Weiterhin sind virtuelle Fahrten durch aus den Gebäudebildern zusammengesetzte visualisierte Straßenzüge am Computer möglich, so daß ein Wohnumfeld innerhalb von Städten bzw. Straßen in Augenschein genommen und dabei jedes einzelne Haus einschließlich seiner Hausnummer identifiziert werden kann. Auf diese Weise können sich z.B. Taxifahrer oder Spediteure, letztere z.B. vor Transporten von sehr voluminösen Gütern oder Gefahrgütern, problemlos und ohne die Umwelt zu belasten mit den örtlichen Gegebenheiten in einer Stadt bzw. an einem Ziel vertraut machen. Andererseits wird es nicht mehr erforderlich sein, daß ein Taxifahrer sämtliche Straßennamen einer Stadt im Kopf hat, wenn das Taxi mit einem auf der Erfindung basierenden Navigationssystem ausgerüstet ist, bei dem die Eingabe von Straße und Hausnummer des Ziels genügt.

Mit Hilfe eines Computers können die Straßenzüge nicht nur zweidimensional angezeigt werden, sondern auch dreidimensional in sogenannter "Virtual Reality". Mit einem Gerät für "Virtual Reality" können die Straßenzüge auch anders als visuell, z.B. in Form eines verkleinerten dreidimensionalen Modells dargeboten werden, welches mit einem Datenhandschuh abgefühlt werden kann. Auf diese Weise kann sich z.B. eine blinde Person gefahrlos eine eigene räumliche Vorstellung von bestimmten örtlichen Gegebenheiten machen.

Weitere Anwendungsmöglichkeiten eröffnet das geplante interaktive Fernsehen. Dabei können Gebäudeansichten bzw. sonstige Informationen aus der Datenbank abgerufen und auf jedem entsprechend eingerichteten Fernsehgerät angezeigt werden.

Weitere Merkmale und Vorteile der Erfindung ergeben sich aus den Unteransprüchen und aus der folgenden Beschreibung mehrerer Ausführungsbeispiele anhand der Zeichnungen.

### Kurze Beschreibung der Zeichnungen

Fig. 1 ist eine schematische Darstellung zur Erläuterung eines ersten Ausführungsbeispiels des Verfahrens zum Sammeln und Verknüpfen von Positionsdaten aus Satellitenortung, und

Fig. 2 ist eine schematische Darstellung zur Erläuterung eines zweiten Ausführungsbeispiels.

### Wege zur Ausführung der Erfindung

Ein Fahrzeug 1 fährt alle Straßen eines bebauten Gebietes in beiden Richtungen ab. In einer Höhe von wenigstens zwei Metern ist auf dem Fahrzeug 1 eine digitale Kamera 2 angebracht, die im wesentlichen horizontal zur Seite zielt. In engen Straßen oder in Einbahnstraßen können auch zwei Kameras verwendet werden, die nach links bzw. nach rechts gerichtet sind, so daß diese Straßen nur einmal durchfahren werden müssen.

Das Fahrzeug 1 enthält einen GPS/GLONASS-Empfänger, der mittels einer Antenne 3 Signale von jeweils wenigstens drei unter je 24 im Weltraum stationierten GPS-Satelliten 4 und GLONASS-Satelliten 4 empfängt. Normalerweise werden die Signale von vier Satelliten benötigt, jedoch gibt es ein "clockhold" genanntes Verfahren, mit dem man unter Umständen mit drei Satelliten auskommt. Durch gemeinsame Auswertung der künstlich verfälschten GPS-Signale und der unverfälschten GLONASS-Signale erhält man die aktuelle geographische Position des Fahrzeugs 1 mit einer Genauigkeit von 6 bis 16 Meter in 95% der Fälle.

Der Empfänger empfängt zusätzlich Funksignale von einer Referenzstation 5 mit genau bekanntem Standort, welche die Satelliten 4 ebenfalls empfängt. Zusammen mit den Referenzdaten kann die aktuelle geographische Position des Fahrzeugs 1 in geringer Entfernung von der Referenzstation 5 auf weniger als 1 Meter genau berechnet werden, wobei je 100 km Entfernung ca. 1 Meter Ungenauigkeit hinzukommen. Daher kann bereits mit einem einzigen Referenzdatensender - z.B. der Sendefunkstelle Mainflingen bei Frankfurt am Main, die solche Referenzdaten ausstrahlt - annähernd im gesamten Gebiet von Deutschland eine Genauigkeit der Ortsbestimmung in der Größenordnung von 5 Meter erreicht werden. Da ein Haus eine durchschnittliche Breite von ca. 10 Meter hat, ist für die weiter unten beschriebene Zuordnung von Hausnummern eine Genauigkeit der Ortsbestimmung von 5 Meter oder weniger wünschenswert.

Um auch Gebiete erreichen zu können, in denen der Referenzdatensender nicht zuverlässig bzw. nicht genügend hoch aufgelöst empfangen werden kann, können die Referenzdaten über ein Mobil-Datenfunknetz (z.B. Modacom) oder als sogenannter Short Message Text (SMT) über den Datenkanal eines Mobilfunknetzes (z.B. D1, D2, E2) mit geringem Aufwand an das Fahrzeug 1 übertragen werden. Der Datenübertragungskanal muß nicht kontinuierlich aufrechterhalten werden, sondern es genügt, die Daten in Intervallen von 0,1 bis 2 Minuten zu übertragen.

Die Kamera 2 nimmt von jedem Gebäude auf der entsprechenden Straßenseite ein Bild 6 auf. Das Bild 6 kann zusammen mit den gerade gemessenen Koordinaten, der Hausnummer 7 des Gebäudes und dem Straßennamen per Mobilfunk an eine Zentrale 8 übertragen werden, in der die Daten in einer schematisch dargestellten Datenbank 9 gespeichert werden. Mit den bis jetzt verfügbaren Mobil-Datenfunknetzen kann die entstehende Datenmenge nicht ohne weiteres bewältigt werden, so daß gegenwärtig bevorzugt wird, die Daten auf einem transportablen Speichermedium im Fahrzeug zu speichern, das später an die Zentrale übersandt wird. Die Hausnummer 7 und der Name der gerade durchfahrenen Straße werden in diesem Beispiel von einem Betrachter im Fahrzeug 1 eingegeben, entweder manuell per Tastatur oder verbal mittels eines Spracherkennungssystems. Falls entsprechende Datenbanken vorhanden sind, kann der Straßenname auch automatisch aus einer solchen Datenbank eingegeben werden.

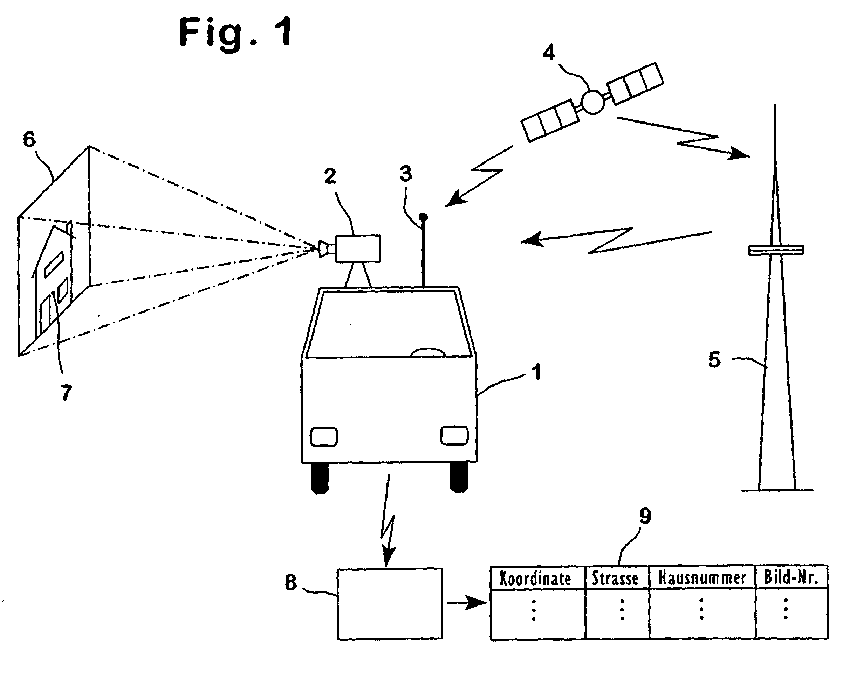

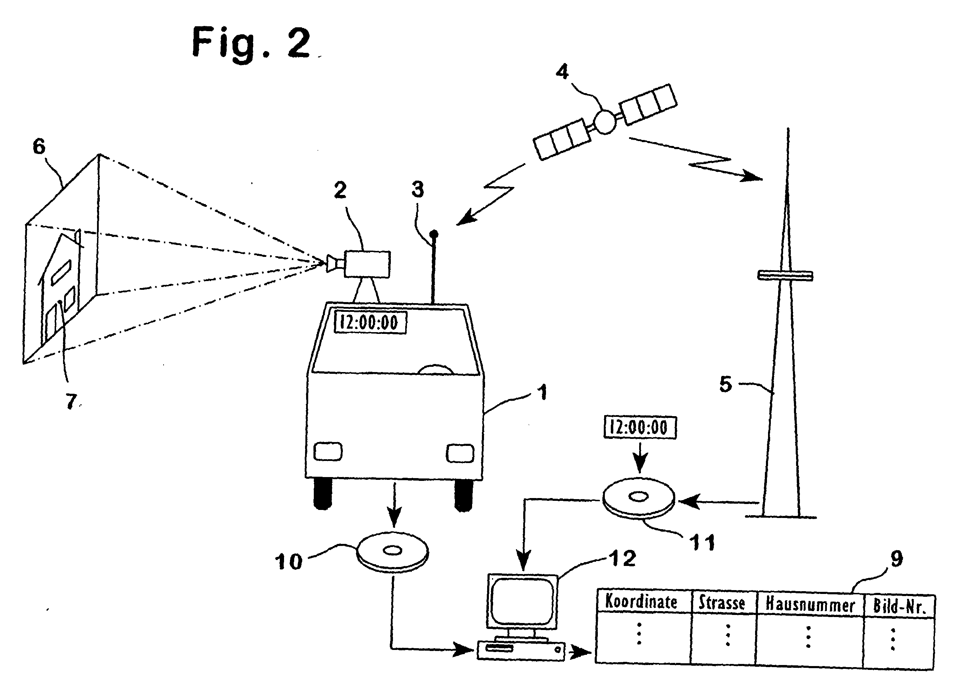

Das in Fig. 2 gezeigte Ausführungsbeispiel unterscheidet sich von dem Ausführungsbeispiel von Fig. 1 dadurch, daß die erwähnten Daten nicht im Fahrzeug 1, sondern erst später differenzkorrigiert werden. Das heißt, es findet keine Online-Korrektur, sondern eine Offline-Korrektur statt. Dazu genügt es, im Fahrzeug 1 anhand der Signale der Satelliten 4 lediglich die GPS/GLONASS-Satellitendaten zu gewinnen, die z.B. die Größen Zeit, Almanach, Ephimeres, Status etc. enthalten, und diese aufzuzeichnen.

Die Satellitendaten mit Zeit, die Hausnummern und Straßennamen sowie die Bilder werden im Fahrzeug 1 auf ein transportables Speichermedium 10 übertragen. Anderenorts werden die Referenzdaten von der Referenzstation 5 ebenfalls zusammen mit der genauen Zeit auf ein Speichermedium 11 übertragen. Die Speichermedien 10 und 11 werden zu einem späteren Zeitpunkt in einer Datenverarbeitungsanlage 12 ausgewertet, in der die GPS/GLONASS-Koordinaten anhand der Referenzdaten und Zeiten differenzkorrigiert werden und in der die Datenbank 9 erstellt wird.

Nachfolgend werden ohne näheren Bezug auf die Zeichnungen verschiedene Ausführungsbeispiele für die Aufnahmetechnik mit der Kamera 2 oder mit mehreren Kameras beschrieben, wobei digitale Still-Kameras und Filmkameras alternativ oder in Kombination verwendet werden.

Am einfachsten wäre es, von einem vor einem Haus stehenden Fahrzeug aus mit einer digitalen Still-Kamera per Weitwinkelobjektiv ein Bild aufzunehmen und simultan die Position und die Hausnummer zu erfassen. Für das langsame Fahren und die Stops auf ca. 800.000 Straßenseiten-Kilometer (2 x 400.000 km) für 13 Millionen Häuser in Deutschland wären Sondergenehmigungen erforderlich. Da das Fahrzeug gelegentlich an einer Stelle zum Stehen kommen wird, von der aus die Hausnummer nicht sichtbar ist, muß außerdem damit gerechnet werden, daß die Hausnummern nicht vollständig erfaßt werden. Jedoch ergeben sich die beste Bildqualität und die genauesten Koordinaten, und es besteht die Möglichkeit, von der Standposition Bilder aus verschiedenen Richtungen aufzunehmen, beispielsweise direkt von vorn und etwas zur Seite perspektivisch. Still-Fotos mit guter Auflösung können direkt auf computerlesbaren Speichermedien gespeichert werden. Pro Bild ergibt sich verlustlos komprimiert eine Größe von 0,15 Megabyte, mithin werden bei zwei Bildern je Haus ca. 3.900 Gigabyte benötigt.

Für eine Erfassung vom fahrenden Fahrzeug aus kommt eine Aufnahmetechnik mit digitalen oder analogen Filmkameras in Betracht. Bei handelsüblichen digitalen Filmkameras, die für die Erfindung bevorzugt werden, zumal die Bilder sogleich in digitaler Form zur Verfügung stehen, werden je Sekunde 25 Vollbilder aus je einem Paar ineinander verschachtelte Halbbilder aufgezeichnet. Die normale Belichtungszeit von 1/50 Sekunde wird z.B. auf 1/600 Sekunde herabgesetzt, um das Verwischen der Bilder infolge der Bewegung der Kamera zu verringern. Bei mäßiger Fahrt erzielt man dann Bilder in noch ausreichender Qualität. Bei neueren Digitalkameras ist es möglich, jedem einzelnen Vollbild die gemessene geographische Position zuzuordnen.

Bei gängigen Videokameras mit zwei Halbbildern pro Bild leidet auch die Qualität des einzelnen Vollbildes geringfügig unter der Kamerabewegung. Dieses Problem kann durch Techniken zur gleichzeitigen Belichtung beider Halbbilder verringert werden, wie sie z.B. sogenannte "Progressive Scan-Kameras" bieten. Außerdem gibt es spezielle Digitalkameras mit der Möglichkeit, die Halbbildproblematik durch einen sogenannten "Photomodus" zu eliminieren.

Wenn von fahrenden Fahrzeugen aus mit Filmkameras aufgenommen wird, können die Hausnummern durch eine spätere visuelle Nachschau der Aufnahmen ermittelt werden. In so einem Fall kann es zweckmäßig sein, die Hausnummern durch eine zusätzliche Kamera mit Teleobjektiv zu erfassen, die auf die Höhe ausgerichtet ist, in der sich gewöhnlich die Hausnummernschilder befinden. Die zusätzliche Kamera kann eine analoge Kamera sein, da die Bilder der Hausnummern nach deren Umsetzung in alphanumerische Zeichen nicht mehr benötigt werden, ist aber vorzugsweise ebenfalls eine digitale Kamera. Übrigens wird unter "Digitalkamera" hier eine Kamera verstanden, mit der die Bilddaten nicht nur digital gewonnen, sondern auch aufgezeichnet werden, d.h. die Aufzeichnung erfolgt nicht auf analoge Weise wie bei den gängigen Systemen H-8, VHS oder SVHS, sondern nahezu verlust- und störungsfrei auf speziellen, für digitale Speicherung geeigneten Magnetbändern. Alternativ können auch optische Speicher (z.B. CD-R, WORM), magneto-optische Speicher (MOD, EOD), magnetische Festplattenspeicher und universale Computerspeicherbänder verschiedener Formate verwendet werden.

Bei einer laufenden Filmkamera mit der gängigen Bildfrequenz würden normalerweise viele überzählige Bilder entstehen. Das Speichermedium kann besser ausgenutzt werden, indem zum Beispiel zwischen frontalen Gesamt-Ansichten zusätzliche vergrößerte Bilder für die Hausnummern oder Schrägansichten der Gebäude untergebracht werden. Diese lassen sich beispielsweise dadurch erzeugen, daß der Kamera ein optisches System vorgeschaltet wird, das einen beweglichen, durch einen Schrittmotor angetriebenen Spiegel und gegebenenfalls weitere Spiegel bzw. Linsen enthält und das eine optische Weiche bildet, die der Kamera nacheinander verschiedene Ansichten des Gebäudes bzw. seiner Umgebung zuführt.

Ferner können z.B. mit einer beweglichen Kamera oder mit mehreren Kameras mehrere Bilder ein und desselben Gebäudes aus verschiedenen Höhen bzw. aus verschiedenen Winkeln aufgenommen werden, um einen räumlichen Eindruck zu gewinnen.

Die Bildfolgen mit den perspektivischen Gebäudeansichten können rechnergestützt aufbereitet werden, um die erfaßten Gebiete dreidimensional zu simulieren und/oder zu visualisieren.

Außerdem können aus solchen perspektivischen Ansichten rechnerisch Gebäudemaße abgeleitet werden. Die Daten der Gebäudemaße werden ebenfalls in der Datenbank gespeichert. Durch die Abrufbarkeit der Maße eines Gebäudes z.B. anhand von Hausnummer und Straßennamen ergeben sich zahlreiche zusätzliche Anwendungsmöglichkeiten.

## Patentansprüche

1. Verfahren zum Sammeln und Verknüpfen von Positionsdaten, die durch Satellitenortung gewonnen werden, bei dem mit wenigstens einem Fahrzeug (1) im wesentlichen alle Straßen eines oder mehrerer zusammenhängender Gebiete abgefahren werden, wobei mit einem Satellitenortungsgerät (3) laufend automatisch Daten zur aktuellen Position jedes Fahrzeugs gewonnen werden und wobei mit einer oder mehreren Kameras (2) Bilder (6) der anliegenden Gebäude aus im wesentlichen horizontaler Sicht aufgenommen werden, und bei dem die Positionsdaten, digitalisierte Bilder der Gebäude und weitere Daten miteinander verknüpft in einer Datenbank (9) gespeichert werden, **dadurch gekennzeichnet,**
**daß** jedes einzelne Bild in Form von digitalen Bilddaten zusammen mit den zugeordneten Daten der Aufnahmeposition dieses Bildes entweder im Fahrzeug auf ein und demselben computerlesbaren Speichermedium zwischengespeichert oder per Funk an eine Zentrale (8) übertragen wird, um in der gegebenen Zuordnung in der Datenbank (9) gespeichert zu werden, und daß die weiteren Daten, die in der Datenbank gespeichert werden, Daten umfassen, die als die postalischen Adressen der aufgenommenen Gebäude ermittelt werden, wobei zumindest die Hausnummern (7) anhand der Hausnummernschilder an den Gebäuden ermittelt werden.

2. Verfahren nach Anspruch 1, **dadurch gekennzeichnet, daß** wänrend der Fahrt außerdem Umweltmeßdaten aufgenommen werden, die ebenfalls in der Datenbank (9) gespeichert werden.

3. Verfahren nach Anspruch 1, **dadurch gekennzeichnet, daß** die Positionsdaten mittels Differential-GPS/GLONASS anhand von Referenzdaten korrigiert werden.

4. Verfahren nach Anspruch 3, **dadurch gekennzeichnet, daß** die Korrektur im fahrenden Fahrzeug (1) durchgeführt wird, welches die Referenzdaten über ein Mobilkommunikationsnetz empfängt.

5. Verfahren nach einem der vorhergehenden Ansprüche, **dadurch gekennzeichnet, daß** als postalische Adresse wenigstens die Hausnummer (7) und der Straßenname jedes Gebäudes ermittelt werden.

6. Verfahren nach einem der Ansprüche 1 bis 4, **dadurch gekennzeichnet, daß** die postalische Adresse oder Bestandteile davon visuell ermittelt und vom Betrachter manuell oder verbal eingegeben werden.

7. Verfahren nach einem der Ansprüche 1 bis 4, **dadurch gekennzeichnet, daß** die postalische Adresse oder Bestandteile davon durch ein automatisches Schrifterkennungssystem ermittelt werden.

8. Verfahren nach einem der Ansprüche 1 bis 4, **dadurch gekennzeichnet, daß** der Straßenname und gegebenenfalls übergeordnete Bestandteile der postalischen Adresse aus vorhandenen Dateien mit geographischen Positionen ermittelt wird.

9. Verfahren nach einem der Ansprüche 1 bis 4, **dadurch gekennzeichnet, daß** die Kamera (2) oder wenigstens eine der Kameras eine digitale Still-Kamera ist.

10. Verfahren nach einem der Ansprüche 1 bis 4, **dadurch gekennzeichnet, daß** die Kamera (2) oder wenigstens eine der Kameras eine digitale Still-Kamera ist und daß das Fahrzeug (1) vor jedem aufzunehmenden Gebäude zum Stillstand gebracht wird.

11. Verfahren nach Anspruch 9, **dadurch gekennzeichnet, daß** die Bilddaten der Kamera (2) oder wenigstens einer der Kameras komprimiert auf computerlesbaren Speichermedien gespeichert werden.

12. Verfahren nach einem der Ansprüche 1 bis 4, **dadurch gekennzeichnet, daß** die Kamera (2) oder wenigstens eine der Kameras eine digitale Filmkamera ist.

13. Verfahren nach Anspruch 12, **dadurch gekennzeichnet, daß** die Gebäude im Vorbeifahren des Fahrzeugs (1) durch die laufende Filmkamera aufgenommen werden.

14. Verfahren nach Anspruch 13, **dadurch gekennzeichnet, daß** der Kamera (2) eine optische Weiche vorgeschaltet ist, über die der Kamera nacheinander verschiedene Gebäude- und Umgebungsansichten zugeführt werden.

15. Verfahren nach einem der Ansprüche 1 bis 4, **dadurch gekennzeichnet, daß** sich die Kamera (2) in einer Höhe von wenigstens 1,5 Meter am Fahrzeug (1) befindet.

16. Verfahren nach einem der Ansprüche 1 bis 4, **dadurch gekennzeichnet, daß** zur Erfassung der Gebäude eines Gebietes zwei Fahrzeuge verwendet werden, die das Gebiet nacheinander beide vollständig durchfahren, und zwar ein Zweirad, das mit einem Satellitenortungsgerät und einem Dateneingabegerät ausgestattet ist und das für die Zuordnung von geographischen Positionen und Hausnummern verwendet wird, und ein Fahrzeug mit größerer Höhe, das ein Satellitenortungsgerät und wenigstens eine Kamera enthält, die an den mit Hilfe des Zweirades ermittelten geographischen Positionen zu jeder Hausnummer automatisch ausgelöst wird.

17. Verfahren nach einem der Ansprüche 1 bis 4, **dadurch gekennzeichnet, daß** aus den Bildern (6) Gebäudemaße abgeleitet werden, die ebenfalls in der Datenbank (9) gespeichert werden.

18. Verwendung des Verfahrens nach einem der Ansprüche 1 bis 4 zur Herstellung eines Fahrzeug-Zielführungssystems, eines Flottenmanagementsystems, eines automatischen Fahrzeug-Notrufsystems oder eines FahrzeugDiebstahlsicherungssystems oder zur Herstellung eines Systems zur Simulation und/oder Visualisierung von beliebigen Teilen der mit dem Verfahren erfaßten Gebiete.

## Claims

1. A method for collection and linking of positional data obtained by satellite localization, wherein at least one vehicle (1) travels through substantially all roads of one or several continuous areas, with a satellite localization device (3) continuously and automatically gathering positional data relating to the actual position of each vehicle and with one or several cameras (2) taking pictures (6) of adjacent buildings, substantially from a horizontal point of view, and wherein the positional data, digitized pictures of the buildings and other data are linked together and recorded in a database (9), **characterized in**
**that** each individual picture in terms of digital picture data together with allocated data of the position of taking this picture either is stored temporarily on one and the same computer readable recording medium in the vehicle or transmitted by radio to a control center (8), in order to be recorded in the given allocation in the database (9), and
**that** the other data, which are recorded in the database, comprising data which are determined as the postal addresses of buildings contained in the taken pictures, with at least the house numbers (7) being determined by means of house number signs on the buildings.

2. A method according to claim 1, **characterized in that** during travel additional environmental survey data are collected and also recorded in the database (9).

3. A method according to claim 1, **characterized in that** the positional data are corrected by means of Differential-GPS/GLONASS based on reference data.

4. A method according to claim 3, **characterized in that** correction is effected in a travelling vehicle (1), receiving reference data over a mobile radio communications network.

5. A method according to one of the preceding claims, **characterized in that** at least the house number (7) and the name of the street are determined for each building as its postal address.

6. A method according to one of the claims 1 to 4, **characterized in that** the postal address or its components are determined visually and entered manually or verbally by an observer.

7. A method according to one of the claims 1 to 4, **characterized in that** the postal address or components of the postal address are determined by an automatic character recognition system.

8. A method according to one of the claims 1 to 4, **characterized in that** components of the postal addresses including at least the names of the streets are determined from existing data files of geographic positions.

9. A method according to one of the claims 1 to 4, **characterized in that** the camera (2) or at least one of the cameras is a digital still camera.

10. A method according to one of the claims 1 to 4, **characterized in that** the camera (2) or at least one of the cameras is a digital still camera and that the vehicle (1) is brought to a stop in front of each building.

11. A method according to claim 9, **characterized in that** the picture data of the camera (2) or at least of one of the cameras are compressed and recorded on computer-readable data carriers.

12. A method according to one of the claims 1 to 4, **characterized in that** the camera (2) or at least one of the cameras is a digital video camera.

13. A method according to claim 12, **characterized in that** the pictures of the buildings are being taken by a continuously operated camera whilst the vehicle (1) is passing the buildings.

14. A method according to claim 13, **characterized in that** the camera (2) is connected in series with an optical switch for feeding the camera in sequence with various views of buildings and their environment.

15. A method according to one of the claims 1 to 4, **characterized in that** the camera (2) is arranged on the vehicle (1) at a minimum height of 1.5 meters.

16. A method according to one of the claims 1 to 4, **characterized in that** two vehicles are used for recording the buildings of an area, with both vehicles completely travelling the area in sequence, wherein one of the vehicles is a two-wheeled vehicle being equipped with a satellite localization device and a data entry device and is used for allocation of geographic positions and house numbers and wherein the other vehicle is of a greater height, comprising a satellite localization device and at least one camera, automatically triggered in the geographic positions for each house number, determined by means of the two-wheeled vehicle.

17. A method according to one of the claims 1 to 4, **characterized in that** dimensions of buildings are derived from the pictures (6) and also being recorded in the database (9).

18. Application of the method according to one of the claims 1 to 4 for producing a vehicle guidance system, a fleet management system, an automatic vehicle emergency call system or a vehicle anti-theft system or for producing a system for simulation and/or visualization of any parts of areas recorded by the method.

## Revendications

1. Procédé pour recueillir et relier entre elles des données de position, qui sont obtenues par repérage par satellite, dans lequel essentiellement toutes les routes d'un ou plusieurs secteurs associés sont parcourues avec au moins un véhicule (1), des données concernant la position actuelle de chaque véhicule étant recueillies automatiquement en continu avec un dispositif de repérage par satellite (3) et des prises de vues (6) des bâtiments voisins étant effectuées d'une perspective essentiellement horizontale avec un ou plusieurs appareils de prise de vues (2) et dans lequel les données de position, les images numérisées des bâtiments et d'autres données sont enregistrées reliées entre elles dans une base de données (9), **caractérisé en ce que**
chaque image individuelle sous forme de données d'image numériques ensemble avec les données associées de l'emplacement de la prise de vue de cette image est soit enregistrée provisoirement dans le véhicule sur un et le même support d'enregistrement pouvant être lu par ordinateur, soit transférée par radio à une centrale (8) pour être enregistrée dans l'association donnée dans la base de données (9), et **en ce que** les autres données qui sont enregistrées dans la base de données comprennent des données qui sont relevées comme adresses postales des bâtiments objets des prises de vues, au moins les numéros d'immeuble (7) étant relevés au moyen des plaques de numéro d'immeuble apposées sur les bâtiments.

2. Procédé selon la revendication 1, **caractérisé en ce que** des données de mesure de l'environnement sont de plus relevées pendant le parcours, qui sont également enregistrées dans la base de données (9).

3. Procédé selon la revendication 1, **caractérisé en ce que** les données de position sont corrigées au moyen d'un GPS / GLONASS différentiel à l'aide de données de référence.

4. Procédé selon la revendication 3, **caractérisé en ce que** la correction est effectuée dans le véhicule (1) en marche qui reçoit les données de référence par l'intermédiaire d'un réseau de télécommunication mobile.

5. Procédé selon l'une quelconque des revendications précédentes, **caractérisé en ce qu'**on saisit comme adresse postale au moins le numéro d'immeuble (7) et le nom de la rue de chaque bâtiment.

6. Procédé selon l'une quelconque des revendications 1 à 4, **caractérisé en ce que** l'adresse postale ou des éléments constitutifs de celle-ci sont déterminés visuellement et sont entrés manuellement ou verbalement par l'observateur.

7. Procédé selon l'une quelconque des revendications 1 à 4, **caractérisé en ce que** l'adresse postale ou des éléments constitutifs de celle-ci sont saisis par un système de reconnaissance automatique de caractères.

8. Procédé selon l'une quelconque des revendications 1 à 4, **caractérisé en ce que** le nom de la rue et le cas échéant des éléments constitutifs d'un niveau supérieur de l'adresse postale sont déterminés à partir de fichiers disponibles comprenant des emplacements géographiques.

9. Procédé selon l'une quelconque des revendications 1 à 4, **caractérisé en ce que** l'appareil de prise de vues (2) ou au moins un des appareils de prise de vues est un appareil de prise de vues numérique.

10. Procédé selon l'une quelconque des revendications 1 à 4, **caractérisé en ce que** l'appareil de prise de vues (2) ou au moins un des appareils de prise de vues est un appareil photographique numérique et **en ce que** le véhicule (1) est stoppé devant chaque bâtiment dont il faut faire une prise de vue.

11. Procédé selon la revendication 9, **caractérisé en ce que** les données d'image de l'appareil de prise de vues (2) ou d'au moins un des appareils de prise de vues sont enregistrées comprimées sur des supports de données pouvant être lus par ordinateur.

12. Procédé selon l'une quelconque des revendications 1 à 4, **caractérisé en ce que** l'appareil de prise de vues (2) ou au moins un des appareils de prise de vues est une caméra numérique.

13. Procédé selon la revendication 12, **caractérisé en ce que** les prises de vues des bâtiments sont effectuées lors du passage du véhicule (1) par la caméra en train de filmer.

14. Procédé selon la revendication 13, **caractérisé en ce qu'**un dispositif de déviation optique est monté en aval de la caméra (2), par l'intermédiaire duquel différentes vues des environs et de bâtiments sont transmises successivement à la caméra.

15. Procédé selon l'une quelconque des revendications 1 à 4, **caractérisé en ce que** l'appareil de prise de vues (2) se trouve sur le véhicule (1) à une hauteur d'au moins 1,5 mètre.

16. Procédé selon l'une quelconque des revendications 1 à 4, **caractérisé en ce que** deux véhicules sont utilisés pour la saisie des bâtiment d'un secteur, qui parcourent tous les deux successivement complètement le secteur, à savoir un véhicule à deux roues qui est équipé d'un dispositif de repérage par satellite et d'un dispositif de saisie de données et qui est utilisé pour l'association d'emplacements géographiques et de numéros d'immeuble, et un véhicule de plus grande hauteur qui contient un dispositif de repérage par satellite et au moins un appareil de prise de vues qui est déclenché automatiquement à chaque numéro d'immeuble aux emplacements géographiques déterminés à l'aide du véhicule à deux roues.

17. Procédé selon l'une quelconque des revendications 1 à 4, **caractérisé en ce qu'**on dérive des images (6) des dimensions de bâtiments qui sont également enregistrées dans la base de données (9).

18. Utilisation du procédé selon l'une quelconque des revendications 1 à 4 pour l'élaboration d'un système de guidage d'un véhicule vers un objectif, d'un système de gestion de flottes, d'un système d'appel de détresse automatique de véhicule ou d'un système de sécurité de vol de véhicule ou pour l'élaboration d'un système de simulation et / ou de visualisation de parties arbitraires du secteur relevé au moyen du procédé.
